# EUROPEAN PATENT APPLICATION

(11) **EP 3 945 342 A1**
(43) Date of publication of application: **02.02.2022**
(21) Application number: 20188376.6
(22) Date of filing: 29.07.2020
(51) Int. Cl.: G01S 7/4865, G01S 17/10, G01S 17/894

(54) **METHOD AND APPARATUS FOR TIME-OF-FLIGHT SENSING**

(71) Applicant: Infineon Technologies AG, 85579 Neubiberg (DE)
(72) Inventor: PLANK, Hannes, 8010 Graz (AT); SCHOENLIEB, Armin, 8054 Seiersberg-Pirka (AT)
(74) Representative: 2SPL Patentanwälte PartG mbB

(57) **Abstract**

A method for time-of-flight sensing is provided. For a single exposure of a light capturing element of a time-of-flight sensor, the method includes illuminating a scene at least once with a first modulated light signal and illuminating the scene at least once with a second modulated light signal. Further, the method includes driving the light capturing element at least once based on a first reference signal portion for measuring reflections of the first modulated light signal from the scene. The method additionally includes driving the light capturing element at least once based on a second reference signal portion for measuring reflections of the second modulated light signal from the scene. The first modulated light signal and the second modulated light signal each exhibit a first duty cycle. The first reference signal portion and the second reference signal portion each exhibit a second duty cycle. The first duty cycle is lower than the second duty cycle.

## Description

### Field

The present disclosure relates to Time-of-Flight (ToF) sensing. In particular, examples relate to a method and an apparatus for ToF sensing.

### Background

The on-time of a ToF unit during which a light source of the ToF unit emits light for ToF sensing may be quite long. Long on-times let the peak power of the light source exceed eye-safety limits. Furthermore, the long peak power consumption can cause brown-out events at the ToF sensor.

Hence, there may be a demand for improved ToF sensing.

### Summary

The demand may be satisfied by the subject matter of the appended claims.

An example relates to a method for ToF sensing. For a single exposure of a light capturing element of a ToF sensor, the method comprises illuminating a scene at least once with a first modulated light signal and illuminating the scene at least once with a second modulated light signal. Further, the method comprises driving the light capturing element at least once based on a first reference signal portion for measuring reflections of the first modulated light signal from the scene. The method additionally comprises driving the light capturing element at least once based on a second reference signal portion for measuring reflections of the second modulated light signal from the scene. The first modulated light signal and the second modulated light signal each exhibit a first duty cycle. The first reference signal portion and the second reference signal portion each exhibit a second duty cycle. The first duty cycle is lower than the second duty cycle.

Another example relates to a ToF sensor comprising an illumination element, a light capturing element and driver circuitry. For a single exposure of the light capturing element, the illumination element is configured to illuminate a scene at least once with a first modulated light signal and at least once with a second modulated light signal. Further, the driver circuitry is configured to drive the light capturing element at least once based on a first reference signal portion for measuring reflections of the first modulated light signal from the scene. The driver circuitry is additionally configured to drive the light capturing element at least once based on a second reference signal portion for measuring reflections of the second modulated light signal from the scene. The first modulated light signal and the second modulated light signal exhibit a first duty cycle. The first reference signal portion and the second reference signal portion exhibit a second duty cycle. The first duty cycle is lower than the second duty cycle.

### Brief description of the Figures

Some examples of apparatuses and/or methods will be described in the following by way of example only, and with reference to the accompanying figures, in which
Fig. 1 illustrates a flowchart of an example of a method for ToF sensing;
Fig. 2 illustrates an example of a ToF sensor;
Fig. 3 illustrates a comparison of exemplary light signals; and
Fig. 4 illustrates a comparison of exemplary correlation functions of a ToF sensor.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a", "an" and "the" is used and using only a single element is neither explicitly nor implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

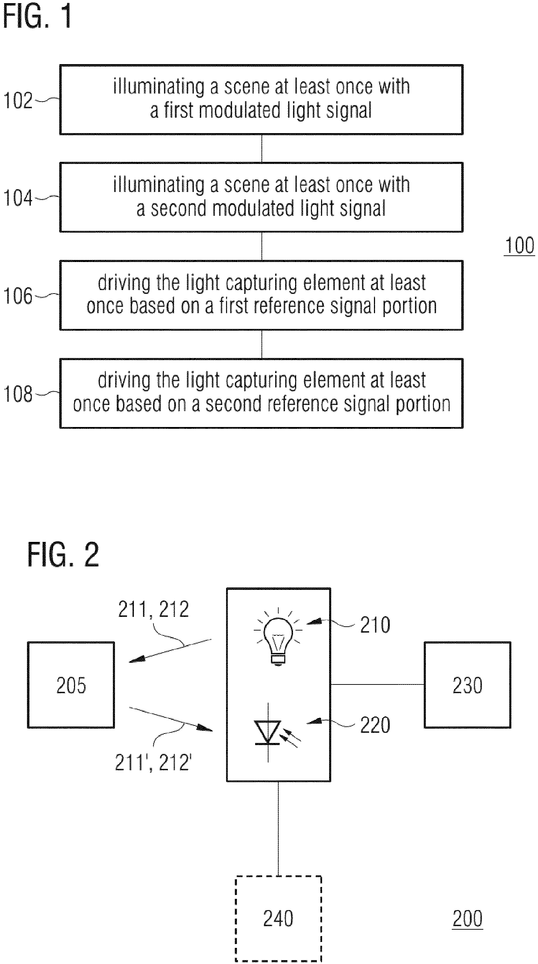

**Fig. 1** illustrates a flowchart of an example of a method 100 for ToF sensing. The method 100 will be described in the following further with reference to **Fig. 2** which illustrates an exemplary ToF sensor 200.

The ToF sensor 200 comprises an illumination element 210 for emitting light to a scene and a light capturing element 220 for measuring reflections of the light from the scene. Further, the ToF sensor 200 comprises driver circuitry 230 for driving (controlling) the illumination element 210 and the light capturing element 220.

In the following, the method 100 for ToF sensing will be described for a single exposure of the light capturing element 220. The single exposure is a single continuous measuring operation for sensing the scene during which the active light capturing element 220 is exposed to light arriving from the scene. In other words, the light capturing element 220 is exposed to the light arriving from the scene and is actively measuring the light arriving from the scene for a predefined continuous exposure time during an exposure in order to sense the scene. It is to be noted that the method 100 may be performed repeatedly for each of a plurality of exposures of the light capturing element 220 during operation of the ToF camera 200.

For the single exposure of the light capturing element 220, the method 100 comprises illuminating 102 the scene at least once with a first modulated light signal 211 and illuminating 104 the scene at least once with a second modulated light signal 212. As illustrated in Fig. 2, the first modulated light signal 211 and the second modulated light signal 212 are emitted by the illumination element 210 towards the scene. In other words, the scene may be illuminated once, twice, thrice or more with each of the first modulated light signal 211 and the second modulated light signal 212. That is, the scene may be illuminated more than once with each of the first modulated light signal 211 and the second light modulated signal 212 during the single exposure. It is to be noted that the scene is illuminated selectively either with the first modulated light signal 211 or the second modulated light signal 212 at a time. In other words, the scene is not illuminated simultaneously (concurrently) with the first modulated light signal 211 and the second modulated light signal 212.

The illumination element 211 generates the first modulated light signal 211 and the second modulated light signal 212 based on one or more illumination signals. The illumination element 210 may comprise any number of light sources. The illumination element 210 may, e.g., comprise one or more Light-Emitting Diodes (LEDs) and/or one or more laser diodes (e.g. one or more Vertical-Cavity Surface-Emitting Lasers, VCSELs) which are fired based on one or more illumination signals. For example, if the illumination element 210 comprises at least two light sources, a first one of the at least two light sources may be used for illuminating the scene at least once with the first modulated light signal 211 and a different second one of the at least two light sources may be used for illuminating the scene at least once with the second modulated light signal 212. Alternatively, the at least two light sources may be used for jointly generating at least one of the first modulated light signal 211 and the second modulated light signal 212 (i.e. each or part of the at least two light sources may generate part of the first modulated light signal 211 and/or the second modulated light signal 212). If the illumination element 210 comprises only a single light source, the single light source may be used for illuminating the scene at least once with the first modulated light signal 211 at least once with the second modulated light signal 212.

If an object 205 is present in the scene, the first modulated light signal 211 and the second modulated light signal 212 are reflected back to the ToF sensor 200. The reflections 211' and 212' of the first modulated light signal and the second modulated light signal are received by the light capturing element 220.

For the single exposure of the light capturing element 220, the method 100 further comprises driving 106 the light capturing element 220 at least once based on a first (continuous) reference signal portion for measuring the reflections 211' of the first modulated light signal from the scene. Additionally, the method 100 comprises, for the single exposure of the light capturing element 220, driving 108 the light capturing element 220 at least once based on a second (continuous) reference signal portion for the measuring reflections 212' of the second modulated light signal from the scene. The light capturing element 220 is driven by the driver circuitry 230. The first reference signal portion and the second reference signal portions are both continuous sections (parts) of a common or two separate reference signals used for driving the light capturing element 220 during the single exposure of the light capturing element 220.

The light capturing element 220 may comprise various components such as e.g. optics (e.g. one or more lenses) and electronic circuitry. For example, the electronic circuitry may comprise an image sensor comprising a plurality of photo-sensitive elements or pixels (e.g. each comprising a Photonic Mixer Device, PMD) and driver electronics for the image sensor. All or only selected elements/pixels of the plurality of photo-sensitive elements/pixels may be used for measuring the reflections 211' and 212'. The respective reference signal portion may, e.g., be used for driving the electronic circuitry of the light capturing element 220 (e.g. the photo-sensitive elements or pixels).

The light capturing element 220 is driven based on the first reference signal portion when the scene is illuminated with the first modulated light signal 211 during the single exposure for measuring the respective reflections 211' of the first modulated light signal from the scene (e.g. each time the scene is illuminated with the first modulated light signal 211 during the single exposure). Similarly, the light capturing element 220 is driven based on the second reference signal portion when the scene is illuminated with the second modulated light signal 212 during the single exposure for measuring the respective reflections 212' of the second modulated light signal from the scene (e.g. each time the scene is illuminated with the second modulated light signal 212 during the single exposure). The light capturing element 220 may be driven more than once based on each of the first reference signal portion and the second reference signal portion during the single exposure in case the scene is illuminated more than once with each of the first modulated light signal 211 and the second light modulated signal 212 during the single exposure. It is to be noted that the light capturing element 220 is driven selectively either based on the first reference signal portion or the second reference signal portion at a time by the driver circuitry. In other words, the light capturing element 220 is not driven simultaneously (concurrently) based on the first reference signal portion and the second reference signal portion.

The first modulated light signal 211 and the second modulated light signal 212 each exhibit a first duty cycle. The first reference signal portion and the second reference signal portion each exhibit a second duty cycle. The first duty cycle is lower than the second duty cycle. For example, the first duty cycle may be half the second duty cycle.

The duty cycle of a signal denotes the fraction of one period during which the signal is active. For example, the duty cycle of the first modulated light signal 211 denotes the ratio of the summed durations of the light pulses in the first modulated light signal 211 to the total period (duration) of the first modulated light signal 211. The duty cycle of the second modulated light signal 212 analogously denotes the ratio of the summed durations of the light pulses in the second modulated light signal 212 to the total period (duration) of the second modulated light signal 212. Similarly, the duty cycle of the first reference signal portion denotes the ratio of the summed durations of either the high or the low pulses in the first reference signal portion to the total period (duration) of the first reference signal portion. Analogously, the duty cycle of the second reference signal portion denotes the ratio of the summed durations of either the high or the low pulses in the second reference signal portion to the total period (duration) of the second reference signal portion.

By illuminating the scene with the modulated light signals 211 and 212 exhibiting a lower duty cycle than the reference signal portions used for driving the light capturing element 220, eye safety regulations may be met as the amount of light emitted per unit time may be reduced compared to conventional ToF sensing approaches. Similarly, the power consumption per unit time for illumination of the scene may be reduced such that brown-out events at the ToF sensor 200 may be prevented. Therefore, the method 100 may allow improved ToF sensing.

The method 100 may be used for a Coded Modulation (CM) measurement as well as for a Continuous Wave (CW) measurement.

For example, if the method is used for a CW measurement, the light pulses in each of the first modulated light signal 211 and the second modulated light signal 212 are of equal pulse length (duration). Further, each pair of succeeding light pulses in the first modulated light signal 211 and the second modulated light signal 212 exhibits an equal pulse spacing. Accordingly, each of the first modulated light signal 211 and the second modulated light signal 212 for a CW measurement is a series of light pulses with equal pulse length and equal pulse spacing. Similarly, each of the first reference signal portion and the second reference signal portion exhibits an alternating series of high and low pulses of equal duration (length) for a CW measurement.

If the method is used for a CM measurement, the light pulses in each of the first modulated light signal 211 and the second modulated light signal 212 may be of varying pulse length and/or pairs of succeeding light pulses in each of the first modulated light signal 211 and the second modulated light signal 212 may exhibit a varying pulse spacing. Accordingly, each of the first modulated light signal 211 and the second modulated light signal 212 for a CM measurement may be a series of light pulses with varying pulse length and/or varying pulse spacing. Similarly, each of the first reference signal portion and the second reference signal portion exhibits an alternating series of high and low pulses of varying duration (length) for a CM measurement. In some examples, each of the first modulated light signal 211 and the second modulated light signal 212 may be a series of light pulses with equal pulse length and equal pulse spacing for a CM measurement, whereas the first and second reference signal portions each exhibit a respective alternating series of high and low pulses of varying duration (length).

The scene may be illuminated equally long with each of the first modulated light signal 211 and the second modulated light signal 212 during the single exposure of the light capturing element 220. The illumination order, i.e. whether the scene is first illuminated with the first modulated light signal 211 and subsequently with the second modulated light signal 212, or vice versa, may be arbitrary. Also, if the scene is illuminated more than once with each of the first modulated light signal 211 and the second light modulated signal 212, the illumination order may be arbitrary as long as the scene is in summary (at large) illuminated equally long with each of the first modulated light signal 211 and the second modulated light signal 212 during the single exposure. In other words, the scene may be illuminated multiple times with each of the first modulated light signal 211 and the second modulated light signal 212 in a random order during the single exposure as long as the scene is in summary (at large) illuminated equally long with each of the first modulated light signal 211 and the second modulated light signal 212 during the single exposure.

The first modulated light signal 211 may be time shifted with respect to the first reference signal portion by a first shift time. Similarly, the second modulated light signal 212 may be time shifted with respect to the second reference signal portion by a second shift time. The second shift time is different from the first shift time.

Using different shift times between the respective modulated light signal and the respective reference signal portion may allow to mimic the correlation function of a ToF measurement using a single target light signal with the second duty cycle during the single exposure. The correlation function of a ToF sensor illustrates (indicates) the expected output of the ToF sensor for the ToF measurement depending on the distance between the ToF sensor and an object reflecting the light of the ToF sensor.

For example, by using different shift times between the respective modulated light signal and the respective reference signal portion, a first correlation function of the ToF sensor 200 for the combined measurement of the reflections 211' and 212' from the scene during the single exposure of the light capturing element 220 may be (substantially) equal to a second correlation function of the ToF sensor 200 for a measurement of reflections of a single target light signal from the scene during the single exposure of the light capturing element 220. The single target light signal exhibits the higher second duty cycle. Light pulses in the single target light signal are a combination of light pulses in the first modulated light signal 211and the second modulated light signal 212.

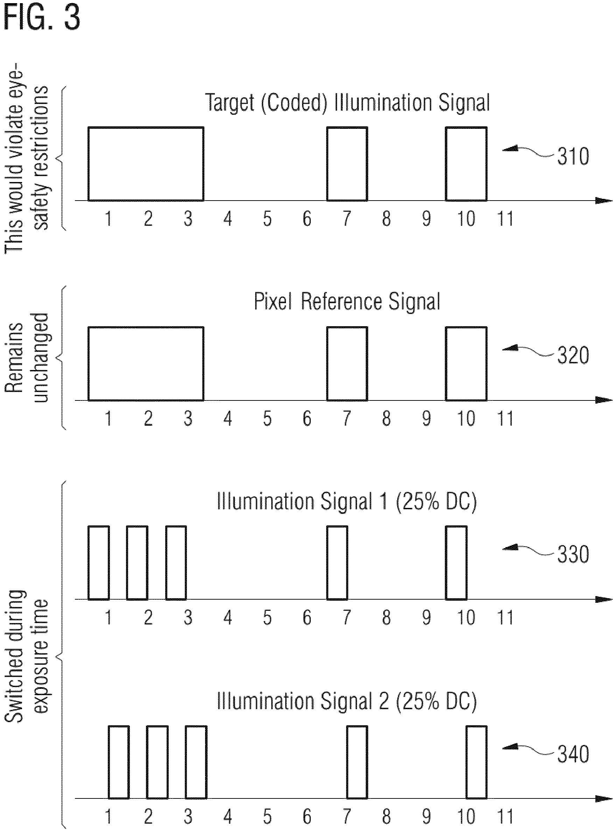

This will be explained in the following with reference to **Fig. 3.** Fig. 3 illustrates in the upper part the light pulses of a target light signal 310 for a CM measurement. In the example of Fig. 3, the target light signal 310 is a series of light pulses with varying pulse length and varying pulse spacing. Due to the long pulse durations, the target light signal 310 would violate eye safety requirements. Further illustrated in Fig. 3 is a reference signal 320 for the light capturing element of the ToF sensor. The target light signal 310 and the reference signal 320 both exhibit a 50 % duty cycle in the example of Fig. 3.

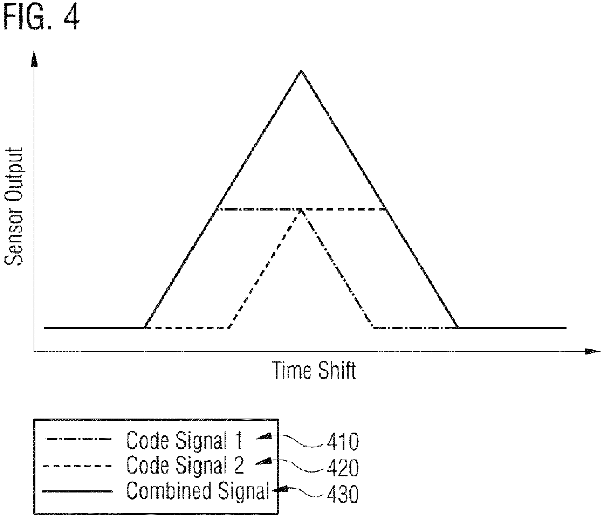

For a single exposure of the light capturing element of the ToF sensor, a scene is illuminated at least once by the target light signal 310. The scene is not illuminated by the ToF sensor with any other light signal during the single exposure. Further, the light capturing element is driven at least once based on the reference signal 320 for measuring reflections of the target light signal 310 from the scene. The corresponding correlation function 430 of the ToF sensor for the CM measurement with the target light signal 310 and the reference signal 320 is illustrated in **Fig. 4** as a function of a time shift between the emission of the target light signal 310 and the reception of the target light signal 310. The time shift depends a) on the constant shift time by which the target light signal 310 is time shifted with respect to the reference signal 320 and b) the distance the light travels from the illumination element to an object in the scene and back to the light capturing element.

Referring back to Fig. 3, a first modulated light 330 and a second modulated light signal 340 are illustrated in the lower part. As illustrated in Fig. 3, the second modulated light signal 340 is a time-shifted replica of the first modulated light signal 330. The first modulated light signal 330 and the second modulated light signal 340 each exhibit a duty cycle of 25 % in the example of Fig. 3. That is, the first modulated light signal 330 and the second modulated light signal 340 each exhibit a lower duty cycle than the target light signal 310. Due to the shorter pulse durations, the first modulated light signal 330 and the second modulated light signal 340 both meet eye safety requirements.

According to the method 100, the scene is illuminated at least once with the first modulated light signal 330 at least once with the second modulated light signal 340 during the single exposure. The reference signal 320 is again used for driving light capturing element. That is, the reference signal 320 corresponds to the first and second reference signal portions described above. In particular, the light capturing element is driven at least once based on the reference signal 320 during the single exposure for measuring reflections of the first modulated light signal 330 from the scene according to the method 100. Further, the light capturing element is driven at least once based on the reference signal 320 during the single exposure for measuring reflections of the second modulated light signal 340 from the scene according to the method 100. That is, the second reference signal portion is identical to the first reference signal portion in the example of Fig. 3.

Fig. 4 exemplarily illustrates the corresponding virtual (hypothetic) correlation function 410 of the ToF sensor for the CM measurement with the first modulated light signal 330 and the reference signal 320. Further, Fig. 4 exemplarily illustrates the corresponding virtual (hypothetic) correlation function 420 of the ToF sensor for the CM measurement with the second modulated light signal 340 and the reference signal 320. It is to be noted that the correlation functions 410 and 420 are exemplary correlation functions. In other examples, the courses of respective correlation functions for CM measurements may be different (e.g. depending on the used modulated light and reference signals). During the exposure, the light capturing element of the ToF sensor (e.g. a PMD) integrates the reflections of the light pulse of both the first modulated light signal 330 and the second modulated light signal 340 during the single exposure. As a consequence, the actual (effective) correlation function of the ToF sensor for the combined measurement of the reflections of the first modulated light signal 330 and the second modulated light signal 340 from the scene during the single exposure of the light capturing element is a combination of the virtual correlations functions 410 and 420 for the individual measurements with the first modulated light signal 330 and the second modulated light signal 340.

Therefore, the actual (effective) correlation function of the ToF sensor for the combined measurement of the reflections of the first modulated light signal 330 and the second modulated light signal 340 during the single exposure is (substantially) equal to the correlation function of the ToF sensor for the CM measurement with the target light signal 310. In other words, the correlation function 430 illustrated in Fig. 4 indicates not only the correlation function of the ToF sensor for the CM measurement with only the single target light signal 310 during the single exposure but also the correlation function of the ToF sensor for the combined measurement of the reflections of the first modulated light signal 330 and the second modulated light signal 340 during the single exposure.

In other words, the target illumination signal is split into two illumination signals (light signals 330 and 340 in the example of Fig. 3) according to the method 100. Both of these signals are emitted during the single exposure. The reference signal for the light capturing element remains the same. Since the reflected light pulses are integrated at the light capturing element during exposure, the two illumination signals are effectively added, which leads to (substantially) the same correlation function (also known as "sensor response function") as for the target illumination signal.

In the example of Fig. 3, the second modulated light signal is a time-shifted replica of the first modulated light signal (i.e. a time offset between the first and second modulated light signals is non-zero), and the second reference signal portion is identical to the first reference signal portion (i.e. signal forms of the first and the second signal portion are identical and a time offset between the first and second reference signal portions is zero).

However, different shift times between the respective modulated light signal and the respective reference signal portion may alternatively be achieved the other way round. In alternative examples, the second reference signal portion may be a time-shifted replica of the first reference signal portion, and the second modulated light signal may be identical to the first modulated light signal. That is, the same light signal may be used as the first modulated light signal and the second modulated light signal, whereas time shifted reference signal portions are used for measuring the reflections of the light signal.

In the example of Fig. 3, two time-shifted 25% duty cycle signals are combined during a single exposure. Accordingly, CM ToF measurements without prolonged light pulses, which avoid eye-safety violations, may be enabled. It is to be noted that the actual duty cycle values used in the example of Fig. 3 are merely exemplary and that other duty cycle values may be used as well.

In the following, exemplary implementations of the driver circuitry 230 are described. However, it is to be noted that the proposed technique is not limited to those examples. In the below described examples, the driver circuitry 230 drives the illumination element 210 and the light capturing element 220 based on respective code segments representing the modulated light signals and the reference signal portions.

For illuminating 102 the scene at least once with the first modulated light signal 211, the driver circuitry 230 may, e.g., drive the illumination element 210 at least once based on a first illumination code segment for generating the first modulated light signal. Analogously, for illuminating 104 the scene at least once with the second modulated light signal 212, the driver circuitry 230 may drive the illumination element 210 at least once based on a second illumination code segment for generating the second modulated light signal 212. Each of the first illumination code segment and the second first illumination code segment represents a respective alternating series of high and low pulses exhibiting the first duty cycle. In other words, each of the first illumination code segment and the second first illumination code segment is a code representation of a respective one of the first modulated light signal 211 and the second modulated light signal 212.

For example, the driver circuitry 230 may generate a single illumination signal based on an illumination code comprising the first illumination code segment and the second illumination code segment. The driver circuitry 230 may further supply the single illumination signal to the illumination element 210 for driving the illumination element 210 during the single exposure.

Analogously, the driver circuitry 230 may generate a single reference signal based on a reference code. The reference code comprises a first reference code segment representing the first reference signal portion and a second reference code segment representing the second reference signal portion. Further, the driver circuitry 230 may supply the single reference signal to the light capturing element 220 for driving the light capturing element during the single exposure of the light capturing element 220.

In alternative examples, the driver circuitry 230 may generate a first illumination signal based on the first illumination code segment, and a second illumination signal based on the second illumination code segment. Accordingly, the driver circuitry 230 may supply each of the first illumination signal and the second illumination signal at least once to the illumination element 210 for driving the illumination element 210 during the single exposure.

Analogously, the driver circuitry 230 may generate a first reference signal based on the first reference code segment and a second reference signal based on the second reference code segment. Accordingly, the driver circuitry 230 may supply each of the first reference signal and the second reference signal at least once to the light capturing element 220 for driving the light capturing element 220 during the single exposure.

For adjusting different shift times between the respective modulated light signal and the respective reference signal portion, the code segments may be adjusted accordingly. For example, the second illumination code segment may be a bit-shifted replica of the first illumination code segment, and the first reference code segment may be identical to the second reference code segment. Accordingly, the second modulated light signal 212 generated by the illumination element 210 is a time-shifted replica of the first modulated light signal 211, wherein the second reference signal portion is identical the first reference signal portion. In other examples, the second illumination code segment may be identical to the first illumination code segment, and the first reference code segment may be a bit-shifted replica of the second reference code segment. Accordingly, the reference signal portion is a time-shifted replica of the first reference signal portion, wherein the second modulated light signal 212 generated by the illumination element 210 is identical to the first modulated light signal 211.

In order to illuminate the scene equally long with each of the first modulated light signal 211 and the second modulated light signal 212 during the single exposure, the driver circuitry 230 may drive the illumination element 210 equally long based on each of the first illumination code segment and the second illumination signal section during the single exposure.

For a CW measurement, the high and low pulses represented by each of the first illumination code segment and the second illumination code segment are of equal duration. Similarly, the high and low pulses represented by each of the first reference code segment and the second reference code segment are of equal duration for a CW measurement.

For a CM measurement, the high and low pulses represented by each of the first illumination code segment and the second illumination code segment may be of varying or equal duration. The high and low pulses represented by each of the first reference code segment and the second reference code segment are of varying duration for a CM measurement.

In order to ensure that eye safety requirements are met, only one digit of each pair of immediately succeeding digits in the first illumination code segment and the second illumination code segment may represent a high pulse. Accordingly, it may be ensured that each of the first modulated light signal 211 and the second modulated light signal 212 comprises only short light pulses.

The ToF sensor 200 may comprise further hardware - conventional and/or custom.

The ToF sensor 200 may further be coupled to a processing circuit 240. For example, the processing circuit 240 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The processing circuit 240 may optionally be coupled to, e.g., read only memory (ROM) for storing software, random access memory (RAM) and/or non-volatile memory. The processing circuit 240 is configured to determine a target quantity based on measurement data (e.g. represented by one or more measurement signals) of the light capturing element 220 of the ToF sensor 200. The measurement data are generated by the light capturing element 220 based on the measured reflections 211' of the first modulated light signal and the measured reflections 212' of the second modulated light signal.

The target quantity may, e.g., be a distance of the ToF sensor 200 to the object 205, a depth image of the scene, a point cloud representing one or more objects in the scene, or an intensity image (e.g. a greyscale image) of the scene.

In the above examples, two modulated light signals and two reference signal portions are used for a signal exposure of the light capturing element. It is to be noted that the proposed technique is not limited to using specifically two modulated light signals for a single exposure. In general, any number n ≥ 2 of modulated light signals and reference signal portions may be used for a single exposure. Accordingly, the second duty cycle may be n times the first duty cycle.

For example, for the single exposure of the light capturing element 220, the method 100 may additionally comprise illuminating the scene at least once with a third modulated light signal. Accordingly, the method 100 may further comprise driving the light capturing element at least once based on a third reference signal portion for measuring reflections of the third modulated light signal from the scene. Like the first modulated light signal 211 and the second modulated light signal 212, the third modulated light signal exhibits the first duty cycle. The third reference signal portion exhibits the second duty cycle like the first reference signal portion and the second reference signal portion. Analogously to what is described above for the first reference signal portion and the second reference signal portion, the third reference signal portion is a continuous section (part) of a reference signal used for driving the light capturing element 220 during the single exposure of the light capturing element 220 (e.g. a common reference signal comprising the first to third reference signal portions or a separate reference signal comprising the third reference signal portion but not both of the first and the second reference signal portions).

The n-th modulated light signal and the n-th reference signal portion may exhibit equivalent characteristics as those described above for the first and second modulated light signals 211, 212 and the first and second reference signal portions. For example, the third modulated light signal may be time shifted with respect to the third reference signal portion by a third shift time which is different from the first shift time and the second shift time described above. For example, the third modulated light signal may a time-shifted replica of the first and second modulated light signals, wherein the third reference signal portion may be identical to the first and second reference signal portions. Alternatively, the third modulated light signal may be identical to the first and second modulated light signals, wherein the third reference signal portion may be a time-shifted replica of the first and second reference signal portions. Again, the scene may be illuminated equally long with each of the first modulated light signal, the second modulated light signal and the third modulated light signal during the single exposure of the light capturing element.

The examples as described herein may be summarized as follows:
Some examples relate to a method for ToF sensing. For a single exposure of a light capturing element of a ToF sensor, the method comprises illuminating a scene at least once with a first modulated light signal and illuminating the scene at least once with a second modulated light signal. Further, the method comprises driving the light capturing element at least once based on a first reference signal portion for measuring reflections of the first modulated light signal from the scene. The method additionally comprises driving the light capturing element at least once based on a second reference signal portion for measuring reflections of the second modulated light signal from the scene. The first modulated light signal and the second modulated light signal each exhibit a first duty cycle. The first reference signal portion and the second reference signal portion each exhibit a second duty cycle. The first duty cycle is lower than the second duty cycle.

According to some examples, the first modulated light signal is time shifted with respect to the first reference signal portion by a first shift time, wherein the second modulated light signal is time shifted with respect to the second reference signal portion by a second shift time different from the first shift time.

In some examples, the second modulated light signal is a time-shifted replica of the first modulated light signal, wherein the second reference signal portion is identical to the first reference signal portion.

In alternative examples, the second reference signal portion is a time-shifted replica of the first reference signal portion, and wherein the second modulated light signal is identical to the first modulated light signal.

According to some examples, the scene is illuminated equally long with each of the first modulated light signal and the second modulated light signal during the single exposure of the light capturing element.

In some examples, light pulses in each of the first modulated light signal and the second modulated light signal are of equal pulse length, wherein each pair of succeeding light pulses in the first modulated light signal and the second modulated light signal exhibits an equal pulse spacing.

In alternative examples, light pulses in each of the first modulated light signal and the second modulated light signal are of varying pulse length, and/or wherein pairs of succeeding light pulses in each of the first modulated light signal and the second modulated light signal exhibit a varying pulse spacing.

According to some examples, a first correlation function of the ToF sensor for the combined measurement of the reflections of the first modulated light signal and the second modulated light signal from the scene during the single exposure of the light capturing element is equal to a second correlation function of the ToF sensor for a measurement of reflections of a single target light signal from the scene during the single exposure of the light capturing element, wherein the single target light signal exhibits the second duty cycle, wherein light pulses in the single target light signal are a combination of light pulses in the first modulated light signal and the second modulated light signal.

In some examples, the ToF sensor comprises an illumination element for illuminating the scene, wherein the illumination element comprises at least two light sources, wherein a first one of the at least two light sources is used for illuminating the scene at least once with the first modulated light signal, and wherein a different second one of the at least two light sources is used for illuminating the scene at least once with the second modulated light signal.

In alternative examples, the ToF sensor comprises an illumination element for illuminating the scene, wherein the illumination element comprises a single light source used for illuminating the scene at least once with the first modulated light signal and illuminating the scene at least once with the second modulated light signal.

According to some examples, the scene is illuminated more than once with each of the first modulated light signal and the second light modulated signal, and/or wherein the light capturing element is driven more than once based on each of the first reference signal portion and the second reference signal portion.

In some examples, the first duty cycle is half the second duty cycle.

In other examples, the method further comprises for the single exposure of the light capturing element: illuminating the scene at least once with a third modulated light signal; driving the light capturing element at least once based on a third reference signal portion for measuring reflections of the third modulated light signal from the scene, wherein the third modulated light signal exhibits the first duty cycle, and wherein the third reference signal portion exhibits the second duty cycle.

According to some examples, illuminating the scene at least once with the first modulated light signal and illuminating the scene at least once with a second modulated light signal comprises: driving an illumination element of the ToF sensor at least once based on a first illumination code segment for generating the first modulated light signal; and driving the illumination element of the ToF sensor at least once based on a second illumination code segment for generating the second modulated light signal, wherein each of the first illumination code segment and the second first illumination code segment represents a respective alternating series of high and low pulses exhibiting the first duty cycle.

In some examples, only one digit of each pair of immediately succeeding digits in the first illumination code segment and the second illumination code segment represents a high pulse.

According to some examples, driving the illumination element of the ToF sensor at least once based on the first illumination code segment for generating the first modulated light signal and driving the illumination element of the ToF sensor at least once based on the second illumination code segment for generating the second modulated light signal comprises: generating a single illumination signal based on an illumination code comprising the first illumination code segment and the second illumination code segment; and supplying the single illumination signal to the illumination element for driving the illumination element during the single exposure of the light capturing element.

In some examples, the method further comprises for the single exposure of the light capturing element: generating a single reference signal based on a reference code, wherein the reference code comprises a first reference code segment representing the first reference signal portion and a second reference code segment representing the second reference signal portion; and supplying the single reference signal to the light capturing element for driving the light capturing element during the single exposure of the light capturing element.

In alternative examples, driving the illumination element of the ToF sensor at least once based on the first illumination code segment for generating the first modulated light signal and driving the illumination element of the ToF sensor at least once based on the second illumination code segment for generating the second modulated light signal comprises: generating a first illumination signal based on the first illumination code segment; generating a second illumination signal based on the second illumination code segment; and supplying each of the first illumination signal and the second illumination signal at least once to the illumination element for driving the illumination element during the single exposure of the light capturing element.

According to some examples, the method further comprises for the single exposure of the light capturing element: generating a first reference signal based on a first reference code segment representing the first reference signal portion; generating a second reference signal based on a second reference code segment representing the second reference signal portion; and supplying each of the first reference signal and the second reference signal at least once to the illumination element for driving the light capturing element during the single exposure of the light capturing element.

Other examples relate to a ToF sensor comprising an illumination element, a light capturing element and driver circuitry. For a single exposure of the light capturing element, the illumination element is configured to illuminate a scene at least once with a first modulated light signal and at least once with a second modulated light signal. Further, the driver circuitry is configured to drive the light capturing element at least once based on a first reference signal portion for measuring reflections of the first modulated light signal from the scene. The driver circuitry is additionally configured to drive the light capturing element at least once based on a second reference signal portion for measuring reflections of the second modulated light signal from the scene. The first modulated light signal and the second modulated light signal exhibit a first duty cycle. The first reference signal portion and the second reference signal portion exhibit a second duty cycle. The first duty cycle is lower than the second duty cycle.

Examples of the present disclosure may enable duty cycle adjustment for CM and CW ToF cameras.

The aspects and features mentioned and described together with one or more of the previously detailed examples and figures, may as well be combined with one or more of the other examples in order to replace a like feature of the other example or in order to additionally introduce the feature to the other example.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A method (100) for time-of-flight sensing, the method comprising for a single exposure of a light capturing element of a time-of-flight sensor:
illuminating (102) a scene at least once with a first modulated light signal;
illuminating (104) the scene at least once with a second modulated light signal;
driving (106) the light capturing element at least once based on a first reference signal portion for measuring reflections of the first modulated light signal from the scene; and
driving (108) the light capturing element at least once based on a second reference signal portion for measuring reflections of the second modulated light signal from the scene,
wherein the first modulated light signal and the second modulated light signal each exhibit a first duty cycle,
wherein the first reference signal portion and the second reference signal portion each exhibit a second duty cycle, and
wherein the first duty cycle is lower than the second duty cycle.

2. The method of claim 1, wherein the first modulated light signal is time shifted with respect to the first reference signal portion by a first shift time, and wherein the second modulated light signal is time shifted with respect to the second reference signal portion by a second shift time different from the first shift time.

3. The method of claim 1 or claim 2, wherein the second modulated light signal is a time-shifted replica of the first modulated light signal, and wherein the second reference signal portion is identical to the first reference signal portion.

4. The method of claim 1 or claim 2, wherein the second reference signal portion is a time-shifted replica of the first reference signal portion, and wherein the second modulated light signal is identical to the first modulated light signal.

5. The method of any of claims 1 to 4, wherein the scene is illuminated equally long with each of the first modulated light signal and the second modulated light signal during the single exposure of the light capturing element.

6. The method of any of claims 1 to 5, wherein light pulses in each of the first modulated light signal and the second modulated light signal are of equal pulse length, and wherein each pair of succeeding light pulses in the first modulated light signal and the second modulated light signal exhibits an equal pulse spacing.

7. The method of any of claims 1 to 5, wherein light pulses in each of the first modulated light signal and the second modulated light signal are of varying pulse length, and/or wherein pairs of succeeding light pulses in each of the first modulated light signal and the second modulated light signal exhibit a varying pulse spacing.

8. The method of any of claims 1 to 7, wherein a first correlation function of the time-of-flight sensor for the combined measurement of the reflections of the first modulated light signal and the second modulated light signal from the scene during the single exposure of the light capturing element is equal to a second correlation function of the time-of-flight sensor for a measurement of reflections of a single target light signal from the scene during the single exposure of the light capturing element, wherein the single target light signal exhibits the second duty cycle, and wherein light pulses in the single target light signal are a combination of light pulses in the first modulated light signal and the second modulated light signal.

9. The method of any of claims 1 to 8, wherein the time-of-flight sensor comprises an illumination element for illuminating the scene, wherein the illumination element comprises at least two light sources, wherein a first one of the at least two light sources is used for illuminating (102) the scene at least once with the first modulated light signal, and wherein a different second one of the at least two light sources is used for illuminating (104) the scene at least once with the second modulated light signal.

10. The method of any of claims 1 to 8, wherein the time-of-flight sensor comprises an illumination element for illuminating the scene, and wherein the illumination element comprises a single light source used for illuminating (102) the scene at least once with the first modulated light signal and illuminating (104) the scene at least once with the second modulated light signal.

11. The method of any of claims 1 to 10, wherein the scene is illuminated more than once with each of the first modulated light signal and the second light modulated signal, and/or wherein the light capturing element is driven more than once based on each of the first reference signal portion and the second reference signal portion.

12. The method of any of claims 1 to 11, wherein the first duty cycle is half the second duty cycle.

13. The method of any of claims 1 to 11, further comprising for the single exposure of the light capturing element:
illuminating the scene at least once with a third modulated light signal; and
driving the light capturing element at least once based on a third reference signal portion for measuring reflections of the third modulated light signal from the scene,
wherein the third modulated light signal exhibits the first duty cycle, and
wherein the third reference signal portion exhibits the second duty cycle.

14. The method of any of claims 1 to 13, wherein illuminating (102) the scene at least once with the first modulated light signal and illuminating (104) the scene at least once with a second modulated light signal comprises:
driving an illumination element of the time-of-flight sensor at least once based on a first illumination code segment for generating the first modulated light signal; and
driving the illumination element of the time-of-flight sensor at least once based on a second illumination code segment for generating the second modulated light signal,
wherein each of the first illumination code segment and the second first illumination code segment represents a respective alternating series of high and low pulses exhibiting the first duty cycle.

15. A time-of-flight sensor (200) comprising an illumination element (210), a light capturing element (220) and driver circuitry (230), wherein for a single exposure of the light capturing element:
the illumination element (210) is configured to illuminate a scene at least once with a first modulated light signal (211) and at least once with a second modulated light signal (212);
and
the driver circuitry (230) is configured to:
drive the light capturing element (220) at least once based on a first reference signal portion for measuring reflections (211') of the first modulated light signal from the scene; and
drive the light capturing element (220) at least once based on a second reference signal portion for measuring reflections (212') of the second modulated light signal from the scene,
wherein the first modulated light signal (211) and the second modulated light signal (212) exhibit a first duty cycle,
wherein the first reference signal portion and the second reference signal portion exhibit a second duty cycle, and
wherein the first duty cycle is lower than the second duty cycle.
